# EUROPÄISCHE PATENTANMELDUNG

(11) **EP 4 588 643 A1**
(43) Veröffentlichungstag der Anmeldung: **23.07.2025**
(21) Anmeldenummer: 24221106.8
(22) Anmeldetag: 18.12.2024
(51) Int. Cl.: B29C 49/48, B29C 33/38

(54) **FORMTRÄGER, BEHÄLTERBEHANDLUNGSMASCHINE UND ANLAGE ZUM HERSTELLEN VON BEHÄLTERN**

(30) Priorität: 22.01.2024 DE 102024101678
(71) Anmelder: KHS GmbH, 44143 Dortmund (DE)
(72) Erfinder: Klöpper, Gerhard, 44143 Dortmund (DE); Baumgarte, Rolf, 44143 Dortmund (DE); Lewin, Frank, 44143 Dortmund (DE)

(57) **Zusammenfassung**

Die Erfindung betrifft einen Formträger (10) zum Tragen eines Formwerkzeugs zum Formen von Behältern aus Vorformlingen, umfassend mindestens einen Grundkörper (12), der mindestens eine Aufnahme (18) für mindestens Formwerkzeug eines zu formenden Behälters aufweist, und mindestens einen Kanal (14) für ein Fluid, der sich durch den Grundkörper (12) erstreckt, wobei der Grundkörper (12) mindestens ein in den Grundkörper (12) eingebettetes Rohr (16) aufweist und sich der Kanal (14) innerhalb des eingebetteten Rohrs (16) erstreckt, wobei der Grundkörper (12) einen ersten Werkstoff aufweist und das Rohr (16) einen zweiten Werkstoff aufweist und sich der erste Werkstoff von dem zweiten Werkstoff unterscheidet. Es wird damit ein Formträger (10) bereitgestellt, der eine verminderte oder keine Korrosion bei der Verwendung von Kühlmitteln aufweist.

## Beschreibung

Die Erfindung betrifft einen Formträger, eine Behälterbehandlungsmaschine und eine Anlage zum Herstellen von Behältern.

Für die Herstellung von Behältern können Vorformlinge zu Behältern umgeformt werden. Der Vorformling wird dazu zunächst thermisch konditioniert, wobei ein Temperaturprofil auf den Vorformling aufgebracht wird. Dies erfolgt durch ein Erwärmen des Vorformlings. Dann kann beispielsweise das Umformen durch einen Reckprozesses erfolgen, bei dem der Vorformling mit einem unter Druck stehenden Fluid zumindest in einem der Umformungsschritte innerhalb einer Form, die die Konturen des herzustellenden Behälters aufweist, biaxial gereckt wird. Durch das Recken wird das Material des Vorformlings an die Innenwände der Form gedrückt. Dabei kann ein Wärme-übertrag von dem Vorformling auf die Form erfolgen.

Zum Abführen der Wärme kann die Form oder ein Träger der Form gekühlt werden, wobei der Träger wärmeleitend mit der Form verbunden ist. Dazu können die Form oder der Träger Kühlkanäle aufweisen, die in das Material der Form bzw. des Trägers eingebracht wurden. Das Kühlmittel kann dann unmittelbar mit dem Material der Form bzw. des Trägers einen Wärmeaustausch durchführen. Insbesondere die Träger können eine Gusseisemmaterial aufweisen. In diesem Fall kann es, insbesondere bei der Verwendung von Wasser als Kühlmittel, zu Korrosionserscheinungen an dem Gusseisen kommen.

Aus DE 10 2005 048 650 B1 ist ein Gussverfahren bekannt, bei dem ein Eisengusswerkstoff, beispielsweise Grauguss oder Sphäroguss, oder eine Aluminiumgusslegierung für die Herstellung eines Kurbelgehäuses verwendet wird. In den Gusswerkstoff kann eine Kühlmittelleitung in Form einer Blechstruktur eingegossen werden.

Aufgabe der Erfindung ist es, einen Formträger bereitzustellen, der eine verminderte oder keine Korrosion bei der Verwendung von Kühlmitteln aufweist.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Bei einem Formträger zum Tragen eines Formwerkzeugs zum Formen von Behältern aus Vorformlingen, umfassend mindestens einen Grundkörper, der mindestens eine Aufnahme für mindestens Formwerkzeug eines zu formenden Behälters aufweist, und mindestens einen Kanal für ein Fluid, der sich durch den Grundkörper erstreckt, ist gemäß der Erfindung vorgesehen, dass der Grundkörper mindestens ein in den Grundkörper eingebettetes Rohr aufweist und sich der Kanal innerhalb des eingebetteten Rohrs erstreckt, wobei der Grundkörper einen ersten Werkstoff aufweist und das Rohr einen zweiten Werkstoff aufweist und sich der erste Werkstoff von dem zweiten Werkstoff unterscheidet.

Der Grundkörper des Formträgers weist damit ein eingegossenes Rohr auf, in dem sich der Kanal erstreckt. Entlang des Kanals kann beispielsweise ein Kühlmittel strömen, insbesondere Wasser. Durch das Rohr wird das Kühlmittel von dem Grundkörper und dessen Werkstoff getrennt. Das Rohr kann damit aus einem korrosionsbeständigen Werkstoff ausgebildet sein, das dem Kanal auskleidet. Weiter wird damit die Herstellung des Formträger vereinfacht, da der Kanal nicht nachträglich in den bereits hergestellten Formträger eingebracht werden muss. Tieflochbohrungen zum Herstellen des Kanals, die mit einem Rostschutz versehen werden, können damit entfallen. Das Rohr für den Kanal kann im Vorfeld hergestellt und in die entsprechend benötigte Form gebracht werden. Bei der Herstellung des Grundkörpers kann das Rohr, wenn beispielsweise ein Gussverfahren verwendet wird, in die Gussform angeordnet werden und in den Gusswerkstoff eingegossen werden. Alternativ kann beispielsweise ein 3-D-Druckverfahren verwendet werden, bei dem das Rohr entweder aus einem korrosionsbeständigen Werkstoff zusammen mit dem Grundkörper gedruckt wird oder das Rohr in den Druck eingebettet wird. Damit können die Kosten der Herstellung des Formträgers gesenkt werden. Weiter kann durch das Einbetten des Rohrs in den Grundkörper eine gute Wärmeübertragung zwischen dem Rohr und dem Grundkörper stattfinden, wobei die Festigkeit des Grundkörpers hoch ist.

Gemäß einigen Ausführungsbeispielen ist denkbar, dass der Grundkörper mindestens einen Werkstoff aus der Gruppe: Eisenwerkstoff, insbesondere Gusseisen mit Kugelgraphit, ausferritisches Gusseisen mit Kugelgraphit, eine Legierung umfassend Gusseisen mit Kugelgraphit oder 3-D-gedruckten Eisenwerkstoff; Aluminiumwerkstoff, insbesondere Aluminiumguss, heiß isostatisch gepresster Aluminiumguss, eine Legierung umfassend Aluminium, 3-D-gedruckten Aluminiumwerkstoff oder heiß isostatisch gepressten 3-D-gedruckten Aluminiumwerkstoff; Verbundwerkstoff, insbesondere einen Kohlefaserwerkstoff oder einen Glasfaserwerkstoff, aufweist.

Diese Werkstoffe weisen eine besonders hohe Festigkeit auf und sind daher für die Verwendung als Formträger besonders geeignet.

Gemäß einigen Ausführungsbeispielen ist denkbar, dass das Rohr mindestens einen Werkstoff aus der Gruppe: Edelstahlwerkstoff, insbesondere Chrom-Nickel-Stahl, Titanwerkstoff, eine Legierung umfassend einen Titanwerkstoff, Kupferwerkstoff oder eine Legierung umfassend einen Kupferwerkstoff aufweist.

Damit kann ein korrosionsbeständiger Werkstoff bereitgestellt werden, aus dem das Rohr hergestellt sein kann. Es kann damit beispielsweise Wasser als Kühlmittel verwendet werden, das durch das Rohr fließt, in dem sich der Kanal durch den Grundkörper erstreckt.

Gemäß einigen Ausführungsbeispielen ist denkbar, dass das Rohr mindestens einen gebogenen Rohrabschnitt aufweist.

Das Rohr kann beispielsweise in einer Ebene zumindest abschnittsweise mäandernd ausgebildet sein. Die Ebene, in der sich das Rohr erstreckt, kann gebogen ausgebildet sein. Alternativ oder zusätzlich kann das Rohr zumindest abschnittsweise spiralförmig ausgebildet sein. Weitere Ausführungsformen des Rohrs können ebenfalls denkbar sein.

Gemäß einigen Ausführungsbeispielen ist denkbar, dass das Rohr an mindestens einem Rohrendstück mindestens einen Anschlussstutzen aufweist.

Die Anschlussstutzen können auf einer Seite des Grundkörpers angeordnet sein. Vorzugsweise können die Anschlussstutzen an einer in einem Montagezustand des Formträgers an einer Behälterherstellungsmaschine nach unten weisenden Fläche des Grundkörpers angeordnet sein. An den Anschlussstutzen können beispielsweise Schläuche oder weitere Rohre befestigt werden, die das Rohr außerhalb des Formträgers an einen Kühlmittelkreislauf anschließen können. In einigen Ausführungsbeispielen kann sich der Anschlussstutzen von dem Grundkörper weg erstrecken. In anderen Ausführungsbeispielen kann der Anschlussstutzen bündig mit Grundkörper abschließen oder in den Grundkörper versenkt sein.

Gemäß einigen Ausführungsbeispielen ist denkbar, dass der Formträger mindestens ein Befestigungselement zum Befestigen eines Formwerkzeugs in der Aufnahme aufweist.

Das Befestigungselement kann nach der Herstellung des Grundkörpers und dem Einbetten des Rohrs in den Grundkörper an dem Grundkörper montiert werden. Mit dem Befestigungselement kann das Formwerkzeug in der Aufnahme gehalten werden.

Die Erfindung betrifft weiter eine Behälterherstellungsmaschine umfassend eine Vielzahl von Formstationen zum Formen eines Behälters aus einem Vorformling, wobei mindestens eine der Formstationen mindestens einen Formträger nach der vorangegangenen Beschreibung aufweist.

Vorteile und Wirkungen sowie Weiterbildungen der Behälterherstellungsmaschine ergeben sich aus den Vorteilen und Wirkungen sowie Weiterbildungen des oben erläuterten Formwerkzeugs. Zur Vermeidung von Wiederholungen wird daher in dieser Hinsicht auf die vorangegangene Beschreibung verwiesen.

Der mindestens eine Formträger kann in einigen Ausführungsbeispiel schwenkbar an der Formstation gelagert sein. In anderen Ausführungsbeispielen kann der mindestens eine Formträger feststehend an der Formstation gelagert sein. Es können beide Ausführungsbeispiele miteinander kombiniert werden.

Weiter betrifft die Erfindung eine Anlage zum Herstellen und/oder Behandeln von Behältern, umfassend mindestens eine Behälterherstellungsmaschine nach der vorangegangenen Beschreibung und/oder mindestens ein Formträger nach der vorangegangenen Beschreibung.

Vorteile und Wirkungen sowie Weiterbildungen der Anlage ergeben sich aus den Vorteilen und Wirkungen sowie Weiterbildungen der oben beschriebenen Behälterherstellungsmaschine bzw. des oben erläuterten Formwerkzeugs. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1: eine schematische Darstellung eines Formträgers;
- Figur 2: eine schematische Darstellung eines Rohrs;
- Figur 3: eine schematische Darstellung einer Gussform mit einem einzubettenden Rohr; und
- Figur 4: eine schematische Darstellung einer Anlage zum Herstellen von Behältern.

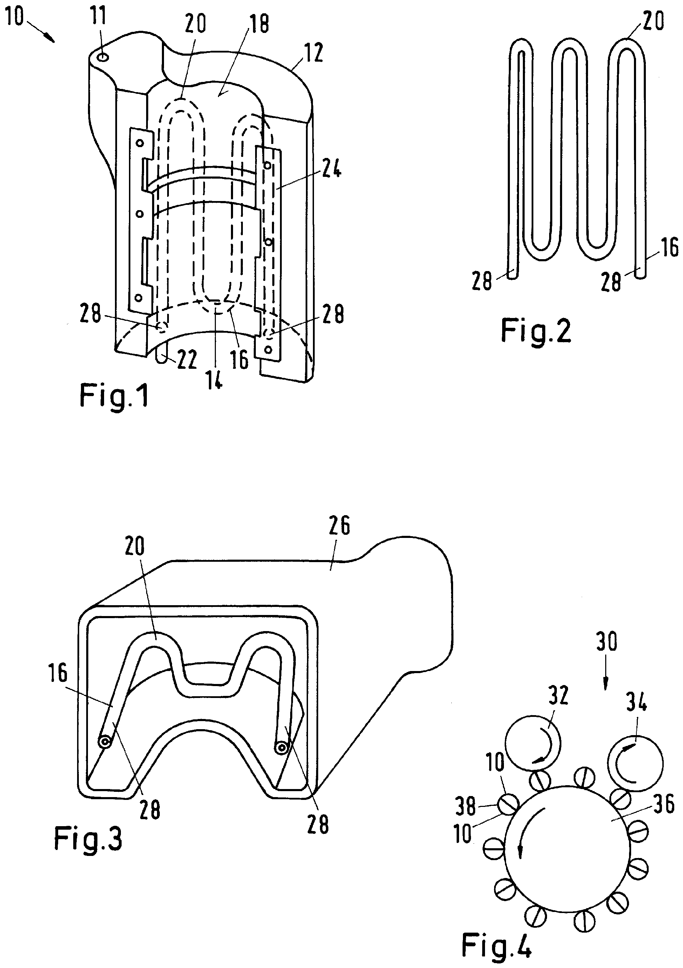

Der Formträger wird gemäß Figur 1 im Folgenden in seiner Gesamtheit mit dem Bezugszeichen 10 bezeichnet.

Der Formträger 10 weist einen Grundkörper 12 auf. An dem Grundkörper 12 ist eine Aufnahme 18 ausgebildet, in der ein Formwerkzeug aufgenommen werden kann. Die Aufnahme 18 weist dazu eine Form auf, die komplementär zu einem Bereich ist, mit dem das Formwerkzeug in die Aufnahme 18 eingesetzt werden kann.

Das Formwerkzeug kann mit einem Befestigungselement 24 an dem Formträger 10 befestigt werden. Das Befestigungselement 24 kann das Formwerkzeug lösbar an dem Formträger 10 befestigen.

Der Formträger 10 kann weiter eine Öffnung 11 aufweisen, durch die eine Achse angeordnet werden kann, um die der Formträger 10 schwenkbar gelagert werden kann.

Weiter weist der Formträger 10 einen Kanal 14 auf, der sich durch den Grundkörper 12 erstreckt. Der Kanal 14 erstreckt sich innerhalb eines Rohrs 16. Das Rohr 16 ist in den Werkstoff des Grundkörpers 12 eingebettet. Der Grundkörper 12 besteht in diesem Beispiel aus einem ersten Werkstoff und das Rohr 16 aus einem zweiten Werkstoff. Der erste Werkstoff und der zweite Werkstoff sind unterschiedlich.

Der erste Werkstoff kann beispielsweise ein metallischer Werkstoff, insbesondere ein Eisenwerkstoff oder ein Aluminiumwerkstoff sein.

Bei der Verwendung eines Eisenwerkstoffs kann der Grundkörper aus einem Gusseisen bestehen. Insbesondere kann der Grundkörper ein Gusseisen mit Kugelgraphit, sogenannten Sphäroguss, ein ausferritisches Gusseisen mit Kugelgraphit oder eine Gusseisen umfassende Legierung, insbesondere mit Kugelgraphit, aufweisen.

Weiter kann der Eisenwerkstoff auch ein mittels 3-D-Druck gedruckter Eisenwerkstoff sein.

Wenn der erste Werkstoff als Aluminiumwerkstoff ausgebildet ist, kann insbesondere Aluminiumguss verwendet werden. Weiter kann auch heiß isostatisch gepresster Aluminiumguss verwendet werden, der weniger Poren als nicht heiß isostatisch gepresster Aluminiumguss aufweist. Weiter kann als Aluminiumwerkstoff auch eine Legierung umfassend Aluminium verwendet werden.

Der Aluminiumwerkstoff kann auch ein mittels 3-D-Druck gedruckter Aluminiumwerkstoff sein. Auch dieser Aluminiumwerkstoff kann zusätzlich heiß isostatisch gepresst werden, um Poren aus dem Werkstoff zu entfernen.

Der erste Werkstoff kann auch ein Verbundwerkstoff sein.

Wenn der erste Werkstoff als Verbundwerkstoffe ausgebildet ist, kann er beispielsweise als Kohlefaserwerkstoff oder Glasfaserwerkstoff ausgebildet sein. Auch andere Verbundwerkstoffe sind denkbar.

Der zweite Werkstoff kann ebenfalls ein metallischer Werkstoff sein, der sich jedoch von dem ersten Werkstoff unterscheidet.

Beispielsweise kann der zweite Werkstoff einen Edelstahlwerkstoff, einen Titanwerkstoff,eine Legierung umfassend einen Titanwerkstoff, einen Kupferwerkstoff oder eine Legierung umfassend einen Kupferwerkstoff aufweisen.

Wenn das Rohr 16 aus einem Edelstahlwerkstoff besteht, kann beispielsweise Chrom-Nickel-Stahl verwendet werden.

In Figur 2 ist das Rohr 16 schematisch dargestellt. Das Rohr kann sich von einem ersten Rohrendstück 28 bis zu einem zweiten Rohrendstück 28 erstrecken. Zwischen den beiden Rohrendstücken 28 kann mindestens ein gebogener Rohrabschnitt 20 angeordnet sein. In diesem Beispiel ist das Rohr 16 mäandernd ausgebildet, wobei sich die mäandernde Form in einer gebogenen Ebene erstreckt.

Sofern der erste Werkstoff ein Gusswerkstoff ist, kann das Rohr 16 gemäß Figur 3 beim Gießen des Grundkörpers 12 in einer Gussform 26 für den Grundkörper 12 angeordnet werden, bevor der Werkstoff in die Gussform 26 eingeführt wird. Nach dem Anordnen des Rohrs 16 in die Gussform 26 kann der Gusswerkstoff in die Gussform 26 eingeführt werden. Das Rohr 16 wird dann in den Gusswerkstoff und damit in den Grundkörper 12 eingebettet.

Alternativ können der erste Werkstoff und/oder der zweite Werkstoff mittels 3D Druck als Formträger 10 bzw. Rohr 16 hergestellt werden. Das Rohr 16 aus dem zweiten Werkstoff kann dabei während des 3D Drucks zusammen mit dem Grundkörper 12, das aus dem ersten Werkstoff hergestellt werden, gedruckt werden. Auf diese Weise kann das Rohr 16 ebenfalls in den Grundkörper 12 eingebettet werden.

Um die mechanischen Eigenschaften, wie zum Beispiel die Ermüdungsfestigkeit und die Verarbeitungsart zu verbessern, kann der Formträger 12 nach der Herstellung heiß isostatisch gepresst werden. Mit dem heiß isostatischen Pressen können Poren aus dem ersten Werkstoff und/oder zweiten Werkstoff entfernt werden. Damit kann zumindest der erste Werkstoff verdichtet werden, sodass der Grundkörper eine verbesserte Mikrostruktur aufweist.

Um die Rohrendstücke 28 können mit Anschlussstutzen 22 verbunden sein. Die Anschlussstutzen 22 können sich von dem Grundkörper 12 weg erstrecken, in ihm versenkt sein oder bündig mit dem ausgebildet sein.

In Figur 4 ist eine Anlage 30 zum Herstellen und/oder Behandeln von Behältern dargestellt. Die Anlage 30 weist mindestens eine Behälterherstellungsmaschine 36 auf. Die Behälterherstellungsmaschine 36 weist eine Vielzahl von Formstationen 38 auf. An mindestens einer der Formstationen 38 ist ein Formträger 10 schwenkbar gelagert. An dem Formträger 10 kann ein Formwerkzeug befestigt sein, mit dem ein Behälter beispielsweise mittels eines Streckblas- oder Form-Füll-Prozesses hergestellt werden kann. Ein anderer Formträger 10 kann beispielsweise feststehend an der Formstation 38 gelagert sein. Auch an diesem Formträger 10 kann ein Formwerkzeug befestigt sein.

Die Anlage kann weiter Transporträder 32, 34 aufweisen. Ein erstes Transportrad 32 kann Vorformlinge zu der Behälterherstellungsmaschine 36 zuführen. Ein zweites Transportrad 34 kann die von der Behälterherstellungsmaschine 36 hergestellten Behälter von der Behälterherstellungsmaschine 36 abführen.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Formträger
- 11: Öffnung
- 12: Grundkörper
- 14: Kanal
- 16: Rohr
- 18: Aufnahme
- 20: gebogener Rohrabschnitt
- 22: Anschlussstutzen
- 24: Befestigungselement
- 26: Gussform
- 28: Rohrendstück
- 30: Anlage
- 32: Transportrad
- 34: Transportrad
- 36: Behälterherstellungsmaschine
- 38: Formstation

## Patentansprüche

1. Formträger (10) zum Tragen eines Formwerkzeugs zum Formen von Behältern aus Vorformlingen, umfassend mindestens einen Grundkörper (12), der mindestens eine Aufnahme (18) für mindestens Formwerkzeug eines zu formenden Behälters aufweist, und mindestens einen Kanal (14) für ein Fluid, der sich durch den Grundkörper (12) erstreckt, **dadurch gekennzeichnet, dass** der Grundkörper (12) mindestens ein in den Grundkörper (12) eingebettetes Rohr (16) aufweist und sich der Kanal (14) innerhalb des eingebetteten Rohrs (16) erstreckt, wobei der Grundkörper (12) einen ersten Werkstoff aufweist und das Rohr (16) einen zweiten Werkstoff aufweist und sich der erste Werkstoff von dem zweiten Werkstoff unterscheidet.

2. Formträger (10) nach Anspruch 1, **dadurch gekennzeichnet, dass** der Grundkörper (12) mindestens einen Werkstoff aus der Gruppe: Eisenwerkstoff, insbesondere Gusseisen mit Kugelgraphit, ausferritisches Gusseisen mit Kugelgraphit, eine Legierung umfassend Gusseisen mit Kugelgraphit oder 3-D-gedruckter Eisenwerkstoff; Aluminiumwerkstoff, insbesondere Aluminiumguss, heiß isostatisch gepresster Aluminiumguss, eine Legierung umfassend Aluminium, 3-D-gedruckter Aluminiumwerkstoff oder heiß isostatisch gepresster 3-D-gedruckter Aluminiumwerkstoff; Verbundwerkstoff, insbesondere einen Kohlefaserwerkstoff oder einen Glasfaserwerkstoff, aufweist.

3. Formträger (10) nach einem der vorangegangenen Ansprüche 1 oder 2, **dadurch gekennzeichnet, dass** das Rohr (16) mindestens einen Werkstoff aus der Gruppe: Edelstahlwerkstoff, insbesondere Chrom-Nickel-Stahl, Titanwerkstoff, eine Legierung umfassend einen Titanwerkstoff, Kupferwerkstoff oder eine Legierung umfassend einen Kupferwerkstoff aufweist.

4. Formträger (10) nach einem der vorangegangenen Ansprüche, **dadurch gekennzeichnet, dass** das Rohr (16) mindestens einen gebogenen Rohrabschnitt (20) aufweist.

5. Formträger (10) nach einem der vorangegangenen Ansprüche, **dadurch gekennzeichnet, dass** das Rohr (16) an mindestens einem Rohrendstück (28) mindestens einen Anschlussstutzen (22) aufweist.

6. Formträger (10) nach einem der vorangegangenen Ansprüche, **dadurch gekennzeichnet, dass** der Formträger (10) mindestens ein Befestigungselement (24) zum Befestigen eines Formwerkzeugs in der Aufnahme (18) aufweist.

7. Behälterherstellungsmaschine (36) umfassend eine Vielzahl von Formstationen (38) zum Formen eines Behälters aus einem Vorformling, wobei mindestens eine der Formstationen (38) mindestens einen Formträger (10) nach einem der vorangegangenen Ansprüche aufweist.

8. Anlage (30) zum Herstellen und/oder Behandeln von Behältern, umfassend mindestens eine Behälterherstellungsmaschine (36) nach einem der vorangegangenen Ansprüche und/oder mindestens ein Formträger (10) nach einem der Ansprüche 1 bis 6.
